# EUROPEAN PATENT SPECIFICATION

(11) **EP 2 925 635 B1**
(45) Date of publication and mention of the grant of the patent: **06.06.2018**
(21) Application number: 13821177.6
(22) Date of filing: 28.11.2013
(51) Int. Cl.: B65D 83/66, B65D 83/64, B05B 11/00, B29C 65/16, B29C 65/00, B65B 53/02, F17C 1/00

(54) **SYSTEM AND METHOD FOR MANUFACTURING PRESSURE UNITS**
SYSTEM UND VERFAHREN ZUR HERSTELLUNG VON DRUCKEINHEITEN
SYSTÈME ET PROCÉDÉ POUR FABRIQUER DES UNITÉS DE PRESSION

(30) Priority: 28.11.2012 CH 26012012
(43) Date of publication of application: 07.10.2015
(73) Proprietor: Airopack Technology Group B.V., 5145 RK Waalwijk (NL)
(72) Inventor: SMITS, Frank, 5384 NN Heesch (NL); HABRAKEN, Rob, 5672 SH Nunen (NL); REGAN, Phil, 5301 BC Zaltbommel (NL)
(74) Representative: Spierenburg, Pieter
(86) International application number: PCT/IB2013/060477
(87) International publication number: WO 2014/083531

(56) References cited:
- WO-A1-03/011574
- WO-A1-2005/082744
- DE-A1-102011 055 460
- JP-A- 2011 255 683
- US-A- 4 337 104

## Description

### FIELD OF THE INVENTION

The invention pertains to a system and a method for manufacturing a pressure unit mounted in a fluid container.

### BACKGROUND OF THE INVENTION

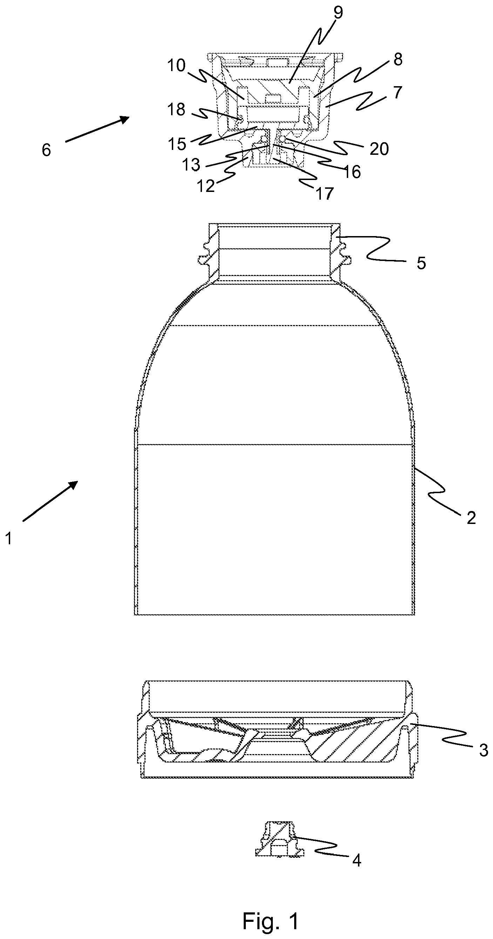

In WO-A-2005/082744 the manufacturing process of a pressure unit - mentioned here as pressure control device - is described. The cylinder 2 (see Fig. 1) with a closed bottom end and an open upper end of a pressure control device 1 is injection blow moulded from polyethylene terephthalate (PET). A central opening or hole 35 is made in the bottom of the cylinder 2 by drilling or, which is more advantageous, during the injection blow moulding process in that the outer shape of the moulding tool has a pin at the bottom for shaping the central opening or hole. The other parts of the insert 5 with the funnel 6, the cup-like piston 13, the ring cylinder 21 and the cylindrical clamping means are made by injection moulding of any suitable material like PET or the like. The cup-like cylinder made of aluminum is positioned at the correct position over the piston with surrounding O-ring under air pressure. At the open end of the cylinder three or four indentations are made to prevent escape of the piston. In this manner the reference pressure chamber is maintained at a predetermined excess pressure. The container or bottle 50 is injection stretch blow-moulded from a proper pre-form made of any suitable synthetic material like PET. The flexible piston 52 is assembled into the bottle 50 with its open end put over the cylinder 2 of the pressure control device 1. The bottle 50 is then laser-welded to the cylinder 2. After assemblage of the container 50 with the pressure control device 1 the pressure control device is pressurized with air having an overpressure of about 8 bar and the bottom is closed by a rubber plug 37.

DE-102011055460-A1 shows a method and device for continuous welding of plastic components of a product along a join region extending over the circumference. The plastic components to be welded are first positioned in the join position thereof and fixed therein. Then, for the welding process, the product is transported past a fixed heat source and is subjected to its own rotary movement in the region of the fixed heat source, in addition to the transport movement, in order to insert the welding energy into the join region.

JP-2011255683-A shows a method for bonding of a resin member that can achieve stable bonding, even when a gap exists between resin members to be bonded. The bonding method of a case body and a front lid in a bleeder case includes: a fitting step which inserts the case body inside a tubular part of the front lid; and a welding step to irradiate a front lid and the case body with a laser beam and to carry out laser welding of the front lid and the case body. In the welding step, while mutually pressing in the direction of axis of rotation, the front lid and the case body which are fitted in the fitting step, the front lid and the case body are rotated a plurality of times during irradiation of the laser beam around the rotation axis line.

WO-03011574-A1 shows a method for bonding medical inhalation capsules in a material fit, and bonding device. The invention relates to a novel method for bonding plastic capsules for inhalers, to the bonded capsules obtained thereby, and to a device for carrying out said method. The capsules obtained according to the inventive method are disposable capsules and preferably contain an individual dose of a pharmaceutical formulation which can be administered by inhalation, said formulation being in the form of powder or liquid. The shape and function of said capsules enables them to be used in powder inhalers or liquid sprays for the production of aerosols. Aerosols thus produced can be inhaled, for example, so that a pharmaceutical formulation can be administered via the pulmonary route.

The production process of above-mentioned document WO-A-2005/082744 is only described in principle steps.

It is the object of the present invention to provide a system and a method for fully automatically manufacturing a pressure unit mounted in a fluid container. This object is accomplished by a system according to the features of claim 1 and by a method according to the features of claim 6.

### BRIEF DESCRIPTION OF THE FIGURES

In the following, the invention is described in greater detail, by way of example, with reference to the accompanying drawings.
- Fig. 1: a cross-section of a pressure unit in exploded view,
- Fig. 2: an insert, an assembled pressure unit and the pressure unit assembled in a plastic container,
- Fig. 3: a schematic view on a production line with two different product outputs,
- Fig. 4: a scheme of the steps in the manufacturing process for producing assembled pressure units and for producing containers including the pressure units, and
- Fig. 5: an alternative production process in which the pressure units are produced and assembled with containers at different locations.

### DETAILED DESCRIPTION

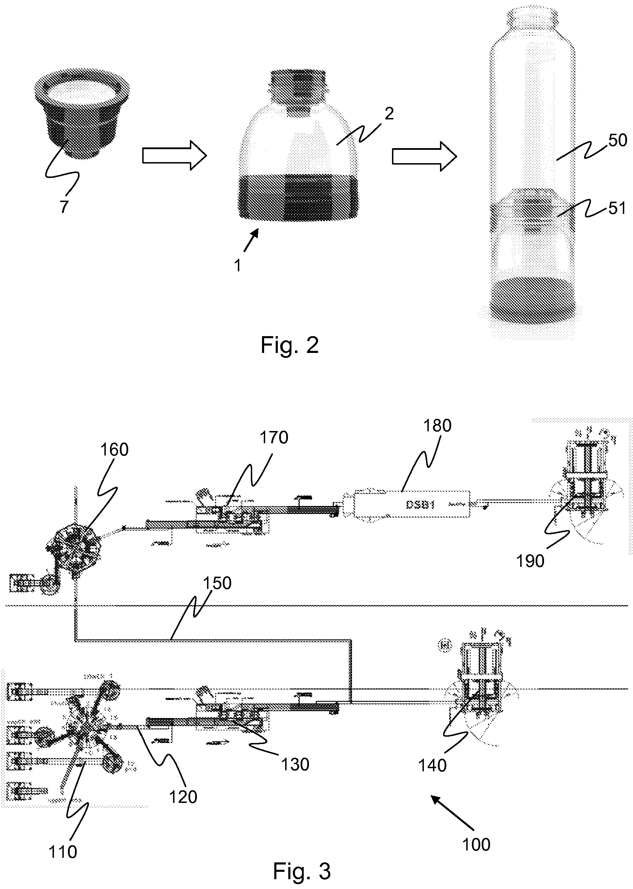

Figure 1 shows an exploded view of a pressure unit 1. The pressure unit 1 comprises a high pressure container 2 with a bottom part 3 and a plug 4 for closing the pressure container 2 at the bottom. On top of the pressure container 2 a rim 5 is provided for holding a pressure control device 6 which comprises a cuplike closure 7, in which a cylindrical member 8 with a closed upper end 9 is mounted, such that a reference pressure chamber 10 is provided. The bottom part 12 of the cuplike closure 7 has a valve opening 13. In the reference pressure chamber 10 a piston 15 with a downward protruding stem 16 and a cylindrical end stop 17 is adapted. Outside of the piston 15 an O-ring 18 is provided for sealing the piston 15 towards the inner wall of the cylindrical member 8. In the downside end of the valve opening 13 an O-ring 20 is provided which cooperates with the end stop 17. The working of the pressure unit 1 is commensurate to the description of WO-A-2005/082744. In Figure 2 the ring-shaped insert or closure 7, the pressure unit 1 with the high pressure container 2 and a container or bottle 50 with a further piston 51 are shown, commensurate to the description of WO-A-2005/082744. The high pressure container 2 in the present configuration is made from a plastic bottle which is formed from a pre-form of PET by stretch blow-moulding. The bottom part of the formed bottle is then cut off and a bottom part 3 is mounted to the high pressure container 2 and the closure 7 is mounted to the top of the high pressure container 2.

In Figure 3 the production line 100 for producing the pressure unit 1 and for producing the container or bottle 50 for being connected to the pressure unit 1 is depicted. In station 110 the insert 7 and the bottom part 3 are mounted to the high pressure container 2 and are transported by line 120 to the welding station 130, where the ring-shaped inserts 7 and the bottom parts 3 are laser-welded to the high pressure containers 2. For laser welding the assembled high pressure containers 2 are rotated and two lasers are mounted in station 130, wherein the laser beams are directed to the bottom and upper parts of the high pressure container 2. The laser equipment used is NOVALAS-C system of Leister Process Technology, Sarnen, Switzerland. In station 140 the assembled pressure units 1 are bulk packed on a pallet and shrink-wrapped by a foil ready for transportation. On the other hand the assembled pressure units 1 may be transported over line 150 to pre-assembling station 160 in which the pressure units 1 are mounted to the containers 50. After pre-assembling the containers 50 are laser-welded in welding station 170, wherein the bottom part 3 of the pressure unit 1 is laser-welded to the container 50. In this station 170 the pre-assembled pressure unit 1 and the container 50 are also rotated and laser welded. In subsequent station 180 a shrink sleeve with product and producer information (logo, product name, product information etc.) is connected to the container 50 by heating the shrink sleeve. The finished containers 50 are then bulk packed and shrink-wrapped on a pallet in station 190.

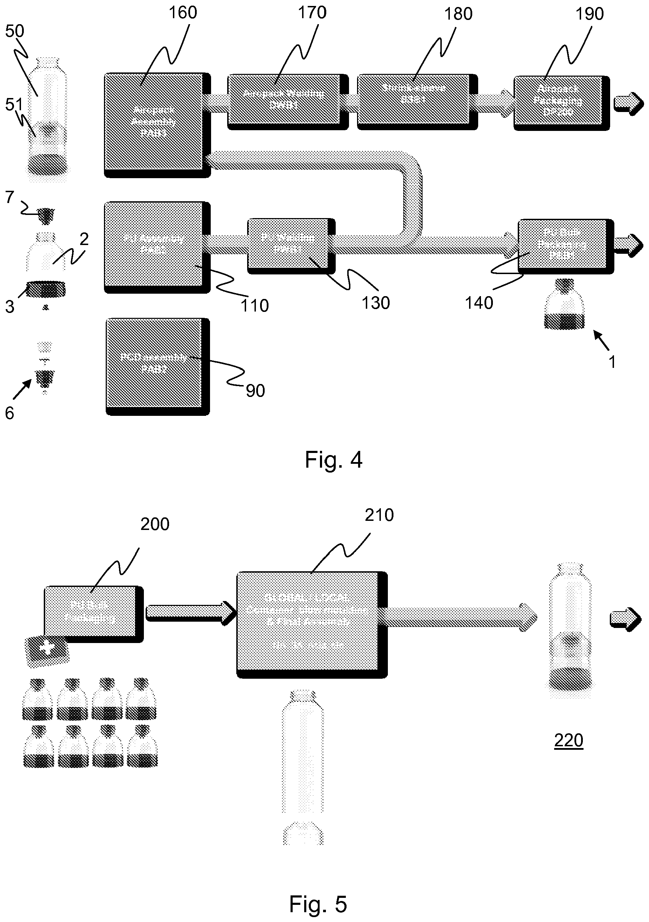

In Figure 4 the production process commensurate to the production line in Figure 2 is schematically shown. In a first step 90 the insert or closure 7 is assembled automatically. The pressure control device 6 within the insert or closure 7 is controlling the pressure in the container 50 which is determined by the pressure in the reference pressure chamber 10 (see Fig. 1), the function thereof has been described in detail in WO-A-2005/082744.

In Figure 5 is depicted the logistics of global manufacturing of pressurized containers 50 in which the filled-in fluid is propelled by normal air with a pressure of e.g. 2 bar. The pressure units 1 are produced in a first factory 200, e.g. in Switzerland, and shipped to factories in other countries all over the world. In those countries there is built a factory 210 for producing containers 50 by the known process of stretch blow-moulding from a pre-form of PET or any other suitable plastic material. In the same factory 210 the containers 50 are assembled with piston 51 and with the pressure unit 1. In another station 220 of the second factory 210 the containers 50 are filled with a fluid according to the needs of the customer (gel, shaving cream, soap, etc.) and capped with a closure valve (not shown). The filled-in containers or bottles 50 are then bulk packed and shrink-wrapped on a pallet for shipping to the customers.

## Claims

1. System for fully automatically manufacturing a pressure unit (1) mounted in a fluid container (50), the pressure unit (1) having a high pressure container (2) with a bottom part (3) and a closure (7) with a pressure control device (6), the system comprising a production line (100) with a first station (110) for automatic mounting of the bottom part (3) and the closure (7) to the high pressure container (2), a second station (130) for welding the bottom part (3) and the closure (7) into the high pressure container (2), a third station (160) for assembling the fluid container (50) and the pressure unit (1) and a fourth station (170) for welding the fluid container (50) to the pressure unit (1).

2. System according to claim 1, wherein a fifth station (180) is provided for connecting a shrink sleeve over the container (50) by applying heat during a short period of time.

3. System according to claim 2, wherein a further station (190) is provided for bulk packing and shrink-wrapping the finished containers (50).

4. System according to claim 1, wherein the first and second stations (110, 130) are provided in a first factory (200) and the third and fourth stations (160, 170) are provided in a second factory (210).

5. System according to claims 1 to 4, wherein rotating means are provided for rotating the high pressure container (2) and two lasers are mounted in the second station (130), wherein the laser beams are directed to the bottom and upper parts of the high pressure container (2).

6. Method for fully automatically manufacturing a pressure unit (1) mounted in a fluid container (50), the pressure unit (1) having a high pressure container (2) with a bottom part (3) and a closure (7) with a pressure control device (6), wherein the bottom part (3) and the closure (7) are mounted automatically to the high pressure container (2), the bottom part (3) and the closure (7) are welded into the high pressure container (2), and the container (50) and the pressure unit (1) are pre-assembled and the container (50) is welded to the pressure unit (1).

7. Method according to claim 6, wherein a shrink sleeve is provided over the container (50) by applying heat during a short period of time.

8. Method according to claim 7, wherein the finished containers (50) are bulk packed and shrink-wrapped.

9. Method according to claim 6, wherein the pressure units (1) are produced in a first factory (200) and the containers (50) are stretch-blow moulded from a pre-form of plastic material and the containers (50) are welded to the pressure units (1) in a second factory (210).

10. Method according to claims 6 to 9, wherein the high pressure container (2) is rotating while the closure (7) and the bottom part (3) are laser welded.

11. Pressure unit (1) mounted in a fluid container (50), the pressure unit (1) having a high pressure container (2) with a bottom part (3) and a closure (7) with a pressure control device (6), prepared by a method for manufacturing according to claim 6.

## Patentansprüche

1. System zur vollautomatischen Herstellung einer Druckeinheit (1), die in einem Fluidbehälter (50) montiert ist, wobei die Druckeinheit (1) einen Hochdruckbehälter (2) mit einem Bodenteil (3) und einen Verschluss (7) mit einer Drucksteuerungsvorrichtung (6) aufweist, wobei das System eine Fertigungsstraße (100) mit einer ersten Station (110) zum automatischen Montieren des Bodenteils (3) und des Verschlusses (7) an den Hochdruckbehälter (2), einer zweiten Station (130) zum Schweißen des Bodenteils (3) und des Verschlusses (7) in den Hochdruckbehälter (2), einer dritten Station (160) zum Zusammenbauen des Fluidbehälters (50) und der Druckeinheit (1) und einer vierten Station (170) zum Schweißen des Fluidbehälters (50) an die Druckeinheit (1) umfasst.

2. System nach Anspruch 1, wobei eine fünfte Station (180) vorgesehen ist, um eine Schrumpfmanschette über dem Behälter (50) anzubringen, indem während eines kurzen Zeitraums Hitze angewendet wird.

3. System nach Anspruch 2, wobei eine weitere Station (190) zum Massenverpacken und Einschweißen der fertiggestellten Behälter (50) vorgesehen ist.

4. System nach Anspruch 1, wobei die erste und die zweite Station (110, 130) in einem ersten Werk (200) vorgesehen sind und die dritte und vierte Station (160, 170) in einem zweiten Werk (210) vorgesehen sind.

5. System nach den Ansprüchen 1 bis 4, wobei Drehmittel zum Drehen des Hochdruckbehälters (2) vorgesehen sind und zwei Laser in der zweiten Station (130) montiert sind, wobei die Laserstrahlen zum Bodenteil und zum oberen Teil des Hochdruckbehälters (2) gerichtet sind.

6. Verfahren zur vollautomatischen Herstellung einer Druckeinheit (1), die in einem Fluidbehälter (50) montiert ist, wobei die Druckeinheit (1) einen Hochdruckbehälter (2) mit einem Bodenteil (3) und einen Verschluss (7) mit einer Drucksteuerungsvorrichtung (6) aufweist, wobei der Bodenteil (3) und der Verschluss (7) automatisch an den Hochdruckbehälter (2) montiert werden, wobei der Bodenteil (3) und der Verschluss (7) in den Hochdruckbehälter (2) geschweißt werden, und wobei der Behälter (50) und die Druckeinheit (1) vormontiert werden und der Behälter (50) an die Druckeinheit (1) geschweißt wird.

7. Verfahren nach Anspruch 6, wobei eine Schrumpfmanschette über dem Behälter (50) angebracht wird, indem während eines kurzen Zeitraums Hitze angewendet wird.

8. Verfahren nach Anspruch 7, wobei die fertiggestellten Behälter (50) massenverpackt und eingeschweißt werden.

9. Verfahren nach Anspruch 6, wobei die Druckeinheiten (1) in einem ersten Werk (200) produziert werden und in einem zweiten Werk (210) die Behälter (50) aus einer Vorform aus Kunststoffmaterial streckblasgeformt werden und die Behälter (50) an die Druckeinheiten (1) geschweißt werden.

10. Verfahren nach den Ansprüchen 6 bis 9, wobei der Hochdruckbehälter (2) gedreht wird, während der Verschluss (7) und der Bodenteil (3) lasergeschweißt werden.

11. Druckeinheit (1), die in einem Fluidbehälter (50) montiert ist, wobei die Druckeinheit (1) einen Hochdruckbehälter (2) mit einem Bodenteil (3) und einen Verschluss (7) mit einer Drucksteuerungsvorrichtung (6) aufweist, und die durch ein Herstellungsverfahren nach Anspruch 6 hergestellt ist.

## Revendications

1. Système de fabrication totalement automatique d'une unité de pression (1) montée dans un contenant de fluide (50), l'unité de pression (1) ayant un contenant haute pression (2) avec une partie de fond (3) et une fermeture (7) avec un dispositif de régulation de pression (6), le système comprenant une ligne de production (100) avec un premier poste (110) pour monter automatiquement la partie de fond (3) et la fermeture (7) sur le contenant haute pression (2), un deuxième poste (130) pour souder la partie de fond (3) et la fermeture (7) dans le contenant haute pression (2), un troisième poste (160) pour assembler le contenant de fluide (50) et l'unité de pression (1) et un quatrième poste (170) pour souder le contenant de fluide (50) à l'unité de pression (1).

2. Système selon la revendication 1, dans lequel un cinquième poste (180) est prévu pour raccorder un manchon rétractable sur le contenant (50) en appliquant de la chaleur pendant une courte période de temps.

3. Système selon la revendication 2, dans lequel un poste supplémentaire (190) est prévu pour mettre en lots et emballer par rétraction les contenants finis (50).

4. Système selon la revendication 1, dans lequel les premier et deuxième postes (110, 130) sont prévus dans une première usine (200) et les troisième et quatrième postes (160, 170) sont prévus dans une seconde usine (210).

5. Système selon les revendications 1 à 4, dans lequel des moyens de rotation sont prévus pour mettre en rotation le contenant haute pression (2) et deux lasers sont montés dans le deuxième poste (130), dans lequel les faisceaux laser sont dirigés vers les parties de fond et supérieure du contenant haute pression (2).

6. Procédé de fabrication totalement automatique d'une unité de pression (1) montée dans un contenant de fluide (50), l'unité de pression (1) ayant un contenant haute pression (2) avec une partie de fond (3) et une fermeture (7) avec un dispositif de régulation de pression (6), dans lequel la partie de fond (3) et la fermeture (7) sont montées automatiquement sur le contenant haute pression (2), la partie de fond (3) et la fermeture (7) sont soudées dans le contenant haute pression (2), et le contenant (50) et l'unité de pression (1) sont préassemblés et le contenant (50) est soudé à l'unité de pression (1).

7. Procédé selon la revendication 6, dans lequel un manchon rétractable est prévu pardessus le contenant (50) en appliquant de la chaleur pendant une courte période de temps.

8. Procédé selon la revendication 7, dans lequel les contenants finis (50) sont mis en lots et emballés par rétraction.

9. Procédé selon la revendication 6, dans lequel les unités de pression (1) sont produites dans une première usine (200) et les contenants (50) sont moulés par soufflage avec étirage à partir d'une préforme en matériau plastique et les contenants (50) sont soudés aux unités de pression (1) dans une seconde usine (210).

10. Procédé selon les revendications 6 à 9, dans lequel le contenant haute pression (2) est en rotation tandis que la fermeture (7) et la partie de fond (3) sont soudées au laser.

11. Unité de pression (1) montée dans un contenant de fluide (50), l'unité de pression (1) ayant un contenant haute pression (2) avec une partie de fond (3) et une fermeture (7) avec un dispositif de régulation de pression (6), préparée par un procédé de fabrication selon la revendication 6.
